# EUROPÄISCHE PATENTSCHRIFT

(11) **EP 3 061 040 B1**
(45) Veröffentlichungstag und Bekanntmachung des Hinweises auf die Patenterteilung: **02.10.2019**
(21) Anmeldenummer: 14755610.4
(22) Anmeldetag: 12.08.2014
(51) Int. Cl.: G06K 19/073

(54) **DOKUMENT MIT EINER KONTAKTLOSEN CHIPKARTENSCHNITTSTELLE UND ELEKTRONISCHES SYSTEM**
DOCUMENT WITH A CONTACTLESS CHIP CARD INTERFACE AND ELECTRONIC SYSTEM
DOCUMENT DOTÉ D'UNE INTERFACE DE CARTE À PUCE SANS CONTACT ET SYSTÈME ÉLECTRONIQUE

(30) Priorität: 25.10.2013 DE 102013221768
(43) Veröffentlichungstag der Anmeldung: 31.08.2016
(73) Patentinhaber: Bundesdruckerei GmbH, 10969 Berlin (DE)
(72) Erfinder: SCHWAN, Matthias, 10437 Berlin (DE); RABELER, Uwe, 30453 Hannover (DE); WOLF, Andreas, 07743 Jena (DE)
(74) Vertreter: Richardt Patentanwälte PartG mbB
(86) Internationale Anmeldenummer: PCT/EP2014/067215
(87) Internationale Veröffentlichungsnummer: WO 2015/058876

(56) Entgegenhaltungen:
- EP-A1- 2 053 546
- DE-A1-102005 062 828
- DE-A1-102006 015 782
- US-A1- 2007 152 829

## Beschreibung

Die vorliegende Erfindung betrifft ein Dokument mit einer kontaktlosen Chipkartenschnittstelle, wie zum Beispiel ein elektronisches Ausweisdokument, sowie ein entsprechendes elektronisches System.

Aus dem Stand der Technik ist das Basic Access Control (BAC) -Verfahren bekannt, welches dazu dient, dass sensible Daten nicht ohne Einwilligung des Inhabers eines maschinenlesbaren Reisedokuments ausgelesen werden können. Das entsprechende Authentifizierungsverfahren zwischen einem Lesegerät und dem maschinenlesbaren Reisedokument basiert auf einer Challenge-Response-Authentifizierung.

Durch die Erfindung bereitgestellte Dokumente unterscheiden sich insbesondere von Dokumenten gemäß DE 10 2005 062828 A1, worin ein Dokument mit einem elektronischen Gerät und einer extern ansprechbaren Schaltvorrichtung zur Aktivierung oder Deaktivierung des elektronischen Geräts offenbart ist, wobei das elektronische Gerät einen Datenspeicher aufweist, auf den in aktiviertem Zustand über eine Schnittstelle zugegriffen werden kann.

Des Weiteren aus dem Stand der Technik bekannt sind ein reversibel aktivier- und deaktivierbares RFID-Daten-Tag (US 2007/0152829 A1), eine verformbare Vorrichtung zur Speicherung und drahtlosen Übertragung von Daten, bei der die Übertragung von Daten in mindestens einem Formzustand blockiert ist (DE 10 2006 015782 A1), und eine elektronische Radiofrequenz-Datenübertragungsvorrichtung, deren Aktivierungszustand von einem durch einen Zeitgeber gesteuerten Schalter vorgegeben wird (EP 2053546 A1).

Der Erfindung liegt demgegenüber die Aufgabe zugrunde, ein verbessertes Dokument sowie ein entsprechendes elektronisches System zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Unter einem "Dokument" wird hier insbesondere ein tragbare Vorrichtung verstanden, welche zumindest einen Datenspeicher zur Speicherung des zumindest einen Attributs und eine kontaktlose Chipkartenschnittstelle zum Auslesen des Attributs aufweist. Vorzugsweise hat das Dokument einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Insbesondere kann es sich bei dem Dokument um ein Wert- oder Sicherheitsdokument handeln. Unter einem "Dokument" werden erfindungsgemäß insbesondere papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Unter einer "kontaktlosen Chipkartenschnittstelle" wird hier eine für Chipkarten geeignete kontaktlose Schnittstelle verstanden, die sowohl zur Kommunikation mit einem Lesegerät als auch zur Einkopplung von elektrischer Energie für die Energieversorgung des Dokuments dient, insbesondere zur Energieversorgung des Prozessors und/oder des Sensors des Dokuments. Insbesondere kann die kontaktlose Chipkartenschnittstelle für eine elektromagnetische Kopplung mit einer entsprechenden Schnittstelle des Lesegeräts ausgebildet sein. Hierzu hat die kontaktlose Chipkartenschnittstelle einen Antennenschwingkreis mit einer Antenne, die zumindest eine Antennenwindung aufweist. Insbesondere kann die kontaktlose Chipkartenschnittstelle als ein sogenanntes RF-Interface ausgebildet sein (vergleiche hierzu Handbuch der Chipkarten, Wolfgang Rankl, Wolfgang Effing, Carl Hanser Verlag München, 2008, Seite 26, Kapitel 2.3.4), beispielsweise als RFID-Schnittstelle oder als NFC-Schnittstelle (vergleiche hierzu RFID-Handbuch, Klaus Finkenzeller, Carl Hanser Verlag München, 2008, insbesondere Seite 7 ff unter 1.3 und Seite 64ff unter 3.4).

Insbesondere kann die kontaktlose Chipkartenschnittstelle zur elektromagnetischen Kopplung im Nahfeld ausgebildet sein, beispielsweise gemäß ISO/IEC14443 (Identification Card - Proximity Integrated Circuit Card), wobei die Reichweite einer solchen kontaktlosen Chipkarten-Schnittstelle im allgemeinen höchstens 15 cm, vorzugsweise höchstens 10 cm beträgt, vgl. dazu auch RFID-Handbuch, Klaus Finkenzeller, Carl Hanser Verlag München, 2008, insbesondere Seiten 276 ff und 9.2.2.

Unter einem "Schalter" wird hier eine Vorrichtung verstanden, die zumindest einen ersten und einen alternativen zweiten Schaltzustand annehmen kann, wobei in dem einen der Schaltzustände der Antennenschwingkreis unterbrochen ist, sodass keine Einkopplung von elektrischer Energie oder keine hinreichende Einkopplung von elektrischer Energie zur Energieversorgung des Dokuments erfolgen kann, sodass das Dokument von dem Lesegerät über die Chipkarten-Schnittstelle keine Kommandos empfangen und auch keine Kommandos senden kann, und wobei der Schalter in dem anderen der ersten und zweiten Schaltzustände den Antennenschwingkreis schließt.

Eine "Unterbrechung" des Antennenschwingkreises durch den Schalter kann dadurch erfolgen, dass der Antennenschwingkreis unterbrochen oder kurzgeschlossen oder so stark gedämpft wird, dass keine ausreichende Einkopplung von elektrischer Energie durch das Lesegerät erfolgen kann.

Die "Schließung" des Antennenschwingkreises durch den Schalter kann so erfolgen, dass eine Unterbrechung einer Leiterbahn des Antennenschwingkreises, wie z.B. einer Antennenwindung, überbrückt, ein Kurzschluss aufgehoben oder eine Dämpfung abgeschaltet wird.

Unter einem "Request-Response Übertragungsprotokoll" wird hier ein Übertragungsprotokoll verstanden, bei dem das Lesegerät die Rolle des Master und das Dokument die Rolle des Slave einnimmt, das heißt das Dokument sendet nur dann eine Nachricht, d.h. eine "Response", wenn es zuvor eine entsprechende Anforderung, das heißt ein Kommando ("Request") empfangen hat. Ein Beispiel für ein solches Übertragungsprotokoll beinhaltet ISO/IEC 1443, Teil 4.

Unter einem "Prozessor" wird hier ein logischer Schaltkreis zur Ausführung von Programminstruktionen verstanden, der ein oder mehrere Prozessorkerne beinhalten kann.

Unter einer "Übertragungsprotokollkomponente zum Senden von Protokollparametern" wird hier ein Programmmodul zur Ausführung durch einen Prozessor des Dokuments verstanden, der zur Protokollaktivierung eines Protokolls der Chipkarten-Schnittstelle dient. Durch die Protokollaktivierung werden Protokollparameter von dem Dokument an das Lesegerät kommuniziert, die für die anschließende Durchführung des Protokolls erforderlich sind. Diese Übertragungsprotokollkomponente kann beispielsweise gemäß ISO/IEC 1443-4 implementiert sein. Hierbei fordert das Lesegerät den sogenannten ATS (Answer to Select) des Dokuments durch Aussenden eines RATS-Kommandos (Request for Answer to Select) an. Das aufgrund des RATS-Kommandos gesendete ATS beinhaltet verschiedene Protokollparameter (vergleiche RFID-Handbuch, Klaus Finkenzeller, Carl Hanser Verlag München, 2008, insbesondere Seiten Seite 289, 290).

Unter einer "Übertragungsprotokollkomponente zur Übertragung von Anwendungsdaten" wird hier ein Programmmodul zur Ausführung durch den Prozessor des Dokuments verstanden, welche zur Durchführung eines Protokolls zur Kommunikation von beliebigen Anwendungsdaten in Form von Kommando (Command) und Antwort (Response) dienst, nachdem das Protokoll mit Hilfe der Protokollparameter initialisiert worden ist. Insbesondere werden die Daten in Form von APDUs (APDU = Application Data Unit) zwischen dem Lesegerät und dem Dokument übertragen, beispielsweise gemäß ISO/IEC 1443-4 (vergleiche RFID-Handbuch, Klaus Finkenzeller, Carl Hanser Verlag München, 2008, insbesondere Seiten Seite 291 unter 9.2.2.4.2).

Unter einem "Sensor" wird hier eine Vorrichtung verstanden, die zur Erfassung eines Umgebungszustands des Dokuments ausgebildet ist sowie zur Abgabe eines diesen Umgebungszustand anzeigenden Sensorsignals. Bei dem Umgebungszustand kann es sich um einen physikalischen Parameter der Umgebung des Dokuments oder des Sensors handeln, insbesondere auch um den zeitlichen Verlauf eines solchen Parameters.

Beispielsweise kann es sich bei dem physikalischen Parameter um die Frequenz, spektrale Verteilung, Intensität, Modulation und/oder den zeitlichen Verlauf von auf den Sensor einfallende Strahlung oder eines elektromagnetischen Feldes handeln. Der Sensor kann auch als mechanischer Sensor ausgebildet sein, um beispielsweise zu sensieren, ob das Dokument in ein Lesegerät eingeführt worden ist und/oder ob das Dokument aufgeschlagen worden ist, sofern es sich um ein buchförmiges Dokument, wie zum Beispiel ein Passbuch, handelt, oder ob der mechanische Schalter von einem Nutzer betätigt worden ist.

Zu dem Sensor kann ein Programmmodul gehören, welches das Sensorsignal aufgrund des von dem Sensor erfassten Umgebungszustands erzeugt, wobei das Programmmodul von dem Sensor selbst oder dem Prozessor ausgeführt werden kann. Je nach Ausführungsform kann der Sensor mit oder ohne Logikschaltung zur Ausführung des Programmmoduls als diskrete Komponente oder als Teil der integrierten elektronischen Schaltung, die auch den Prozessor sowie die Speicher beinhaltet, ausgebildet sein.

Nach Ausführungsformen der Erfindung reagiert das Dokument auf ein Initialisierungskommando, ein Lesekommando oder auch ein anderes Kommando nicht, solange der Schalter den einen der ersten und zweiten Schaltzustände hat, in dem der Schalter den Antennenschwingkreis unterbricht. Solange nämlich das Dokument nicht oder nicht ausreichend mit Energie versorgt wird, kann das Betriebssystem die Übertragungsprotokollkomponente zum Senden von Protokollparametern nicht starten, sodass das Übertragungsprotokoll nicht initialisiert wird und dadurch auch keine Antwort des Dokuments zum Beispiel auf ein Lesekommando erfolgen kann. Insbesondere reagiert das Dokument auch nicht auf Kommandos zum Auslesen chipindividueller Daten, wie z.B. EF.Info, EF.DIR oder EF.CardAccess und gibt kein Fehlersignal ab.

Nach Ausführungsformen der Erfindung muss zur Verwendung des Dokuments zunächst der Umgebungszustand so beschaffen sein, dass der Sensor ein Sensorsignal abgibt, das das Vorliegen eines vordefinierten Umgebungszustands anzeigt. Es reicht also nicht aus, dass das Dokument in dem Lesebereich eines Lesegeräts eingebracht wird, sodass elektrische Energie von dem Lesegerät zur Energieversorgung des Dokuments eingekoppelt wird und damit der Prozessor beginnt zu arbeiten. Zusätzlich muss die Bedingung erfüllt sein, dass der Umgebungszustand des Dokuments so geartet ist, dass der Sensor das Sensorsignal abgibt und dadurch der Schalter seinen Schaltzustand ändert. Nur wenn auch dies der Fall ist, kann das Dokument auf ein Kommando überhaupt reagieren.

Ausführungsformen der Erfindung sind besonders vorteilhaft, da es die Erfindung ermöglicht, für einen verbesserten Schutz der Privatsphäre des Nutzers zu sorgen, indem nicht nur das Auslesen von Attributen des Nutzers aus dem Dokument durch ein kryptografisches Protokoll geschützt ist, sondern auch das Auslesen nicht personengebundener Daten des Dokuments, nämlich chipspezifischer Daten, insbesondere der Protokollparameter für die Initialisierung des Übertragungsprotokolls. Auch aus solchen Protokollparametern könnten nämlich durch einen Angreifer Rückschlüsse zum Beispiel auf die Nationalität oder den Ausstellungszeitraum des Dokuments gezogen werden.

Ferner kann durch die Erfindung unterbunden werden, dass durch einen Angreifer die Anwesenheit eines Nutzers mit dem Dokument sensiert werden kann, da das Dokument überhaupt nicht auf Kommandos des Angreifers antwortet, solange der Umgebungszustand nicht hergestellt ist, der zu der Abgabe des Sensorsignals führt, solange also beispielsweise das Dokument nicht in ein entsprechendes Lesegerät eingeführt oder aufgelegt worden ist oder solange der Nutzer das Dokument nicht aufgeschlagen hat, sofern es sich um ein buchförmiges Dokument handelt. Aufgrund dieser zusätzlichen Sicherung des Dokuments wird es ferner möglich, eine größere Reichweite der kontaktlosen Chipkarten-Schnittstelle zuzulassen.

Nach einer Ausführungsform der Erfindung ist das Chipkartenbetriebssystem zur Erzeugung eines Fehlersignals als Antwort auf ein empfangenes ungültiges Kommando ausgebildet. Eine solche Antwort auf ein ungültiges Kommando wird aber von dem Dokument nicht gesendet, solange der Schalter nicht seinen Schaltzustand hat, in dem der Antennenschwingkreis geschlossen ist. Hierdurch wird ein Angriff zur Detektion eines Dokuments unterbunden, da auf ein ungültiges Kommando, das von dem Lesegerät eines Angreifers abgesendet wird, keinerlei Antwort durch das Dokument erfolgt, wenn der für eine Antwort erforderliche Umgebungszustand des Dokuments nicht besteht.

Nach Ausführungsformen der Erfindung ist der Schalter als elektronischer Schalter ausgebildet, der eine elektronische Schaltung mit einem oder mehreren steuerbaren Halbleiterschaltern, insbesondere Transistoren, beinhaltet. Insbesondere kann es sich bei dem Schalter um eine bistabile Kippstufe, das heißt einen sogenannten Flipflop, handeln, sodass der Schalter in einem seiner Schaltzustände verbleibt, solange er kein Signal, das heißt hier das Sensorsignal, zum Wechseln seines Schaltzustands an seinem Steuereingang empfängt.

Bei dem Schalter kann es sich auch um eine monostabile Kippstufe, das heißt einen sogenannten Monoflop, handeln, der aufgrund des Sensorsignal seinen Schaltzustand für eine vorgegebene Zeitdauer ändert und dann automatisch wieder in seinen ursprünglichen Schaltzustand zurückfällt. Die Zeitdauer kann dabei so gewählt sein, dass sie für die Initialisierung der Chipkartenschnittstelle, die Durchführung eines kryptografischen Protokolls und das nachfolgende Auslesen zumindest eines Attributs ausreichend lang ist, sodass der Antennenschwingkreis während dieser Zeitdauer geschlossen ist.

Wenn beispielsweise für die Durchführung des kryptografischen Protokolls zum Lesen des zumindest einen Attributs aus dem Dokument eine Mindestanzahl von Antworten des Dokuments auf entsprechende Kommandos des Lesegeräts erforderlich ist, so wird die Zeitdauer dementsprechend so gewählt, dass neben der Initialisierung der Chipkartenschnittstelle und dem eigentlichen Auslesen des zumindest einen Attributs, diese Mindestanzahl von Antworten während der Zeitdauer erfolgen kann.

Nach einer Ausführungsform der Erfindung ist das Dokument buchförmig, beispielsweise als Passbuch ausgebildet. Der Sensor befindet sich dann auf einer Seite des Passbuchs, wobei der Sensor als Magnetsensor zur Sensierung eines magnetischen Feldes ausgebildet ist. Eine andere Seite des Dokuments oder der Einbanddeckel des Dokuments trägt einen Permanentmagneten, der im geschlossen Zustand des Dokuments den Sensor mit einem magnetischen Feld beaufschlagt.

Solange sich der Sensor in dem magnetischen Feld befindet, das heißt, solange das Dokument geschlossen ist, gibt der Sensor das Sensorsignal zur Auslösung der Speicherung des Freigabezustands durch das Betriebssystem nicht ab. Sobald sich aber der Umgebungszustand ändert, der Sensor nämlich aus dem magnetischen Feld entfernt wird, indem das Dokument aufgeschlagen wird, gibt der Sensor das Sensorsignal ab, sodass der Schalter seinen Schaltzustand ändert. Dadurch wird die Initialisierung des Übertragungsprotokolls und die nachfolgende Durchführung des kryptografischen Protokolls zum Lesen des zumindest einen Attributs aus dem Dokument ermöglicht.

In einem weiteren Aspekt betrifft die Erfindung ein elektronisches System mit einem erfindungsgemäßen Dokument und einem Lesegerät, welches eine kontaktlose Schnittstelle hat, um mit der kontaktlosen Schnittstelle des Dokuments nach dem Übertragungsprotokoll zu kommunizieren.

Nach einer Ausführungsform der Erfindung hat das Lesegerät einen Signalgeber, der dazu ausgebildet ist, das Sensorsignal des Sensors auszulösen. Bei dem Signalgeber kann es sich beispielsweise um eine Strahlungsquelle handeln. Sobald das Dokument in das Lesegerät eingeführt wird oder auf das Lesegerät aufgelegt wird, wird das Dokument, das heißt dessen Sensor, von dem Signalgeber des Lesegeräts beaufschlagt, sodass sich ein bestimmter Umgebungszustand einstellt, der von dem Sensor erfasst wird und zur Abgabe des Sensorsignals führt, sodass der Schalter seinen Schaltzustand ändert.

Im Weiteren werden Ausführungsformen der Erfindung mit Bezugnahme auf die Zeichnungen näher erläutert. Es zeigen:
- Figur 1: eine Anordnung einer Ausführungsform eines erfindungsgemäßen elektronischen Systems,
- Figur 2: eine Anordnung einer weiteren Ausführungsform eines erfindungsgemäßen elektronischen Systems,,
- Figur 3: eine Anordnung einer weiteren Ausführungsform eines erfindungsgemäßen elektronischen Systems,
- Figur 4: eine Ausführungsform eines buchförmigen erfindungsgemäßen Dokuments,
- Figur 5: eine Ausführungsform eines erfindungsgemäßen buchförmigen Dokuments in einer Draufsicht,
- Figur 6: eine weitere Ausführungsform eines aufgeschlagenen buchförmigen Dokuments in einer Ansicht von oben.

Elemente der nachfolgenden Ausführungsformen, die einander entsprechen oder identisch sind, werden mit identischen Bezugszeichen gekennzeichnet.

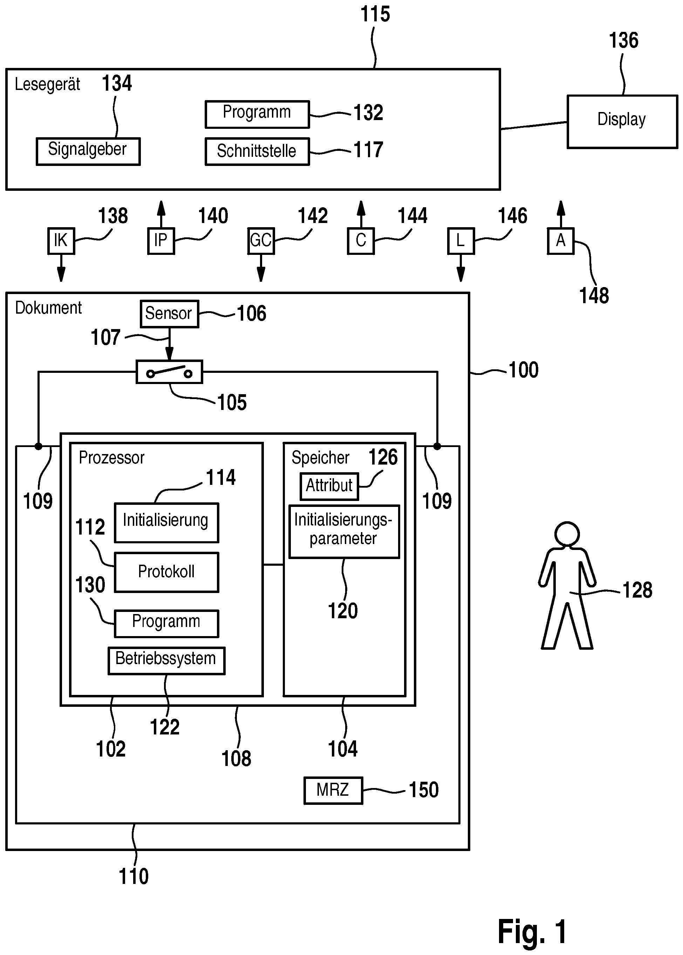

Die Figur 1 zeigt ein Dokument 100, das zum Beispiel als Chipkarte ausgebildet sein kann. Insbesondere kann es sich bei dem Dokument 100 um einen elektronischen Personalausweis handeln.

Das Dokument 100 hat einen Prozessor 102, einen nicht-flüchtigen elektronischen Speicher 104, einen Schalter 105 und einen Sensor 106. Der Prozessor 102 und der Speicher 104 sind in einer elektronischen Schaltung, das heißt einem Chip 108, integriert, wohingegen der Schalter 105 und der Sensor 106 als separate diskrete oder gedruckte Komponenten auf oder in dem Dokument realisiert sind. Alternativ können auch der Schalter 105 und/oder der Sensor 106 in dem Chip 108 oder einer anderen integrierten Schaltung implementiert sein.

Das Dokument 100 hat eine kontaktlose Chipkarten-Schnittstelle, die einen Antennenschwingkreis mit einer Antenne 110 aufweist, sowie ein Programmmodul 112, welches ein Request-Response-Übertragungsprotokoll implementiert. Zu der kontaktlosen Chipkarten-Schnittstelle gehört ferner ein Programmmodul 114, welches zur Initialisierung des Übertragungsprotokolls dient.

Ein Lesegerät 115 hat eine entsprechende kontaktlose Chipkarten-Schnittstelle 117 zur Einkopplung von Energie in die Antenne 110, das heißt für die Energieversorgung des Chips 108 sowie für eine Request-Response-Kommunikation mit dem Dokument 100 nach dem Übertragungsprotokoll und die Initialisierung dieses Übertragungsprotokolls. Beispielsweise kann es sich bei dem Übertragungsprotokoll um ein in ISO/IEC 14443-4 beschriebenes Protokoll handeln.

In dem nicht-flüchtigen Speicher 104 sind Initialisierungsparameter 120 zur Initialisierung des Übertragungsprotokolls gespeichert. Diese Initialisierungsparameter 120 überträgt das Dokument 100 als Antwort auf ein Initialisierungskommando des Lesegeräts 115 an das Lesegerät 115, damit die nachfolgende Kommunikation gemäß dieser Initialisierungsparameter 120 durchgeführt wird.

Der Sensor 106 des Dokuments 100 dient zur Erfassung eines Umgebungszustands des Dokuments, das heißt zur Erfassung eines physikalischen Parameters. Beispielsweise kann es sich bei dem Sensor 106 um einen optischen, magnetischen oder mechanischen Sensor handeln. Wenn ein vorgegebener Umgebungszustand vorliegt, das heißt beispielsweise der Sensor 106 mit einer Strahlung oder einem Magnetfeld, einer Kraft oder einem Druck beaufschlagt wird, so führt dies zur Abgabe eines Sensorsignals an einen Steuereingang 107 des Schalters 105.

In dem Speicher 104 des Dokuments ist zumindest ein Attribut 126 eines Nutzers 128 gespeichert. Der Nutzer 128 und das Dokument 100 sind einander zugeordnet; beispielsweise handelt es sich bei dem Dokument 100 um ein elektronisches Ausweisdokument des Nutzers 128, wie zum Beispiel dessen elektronischen Personalausweis. Bei dem in dem Speicher 104 gespeicherten Attribut 126 kann es sich zum Beispiel um den Namen, Vornamen, Geburtsdatum, den Wohnort oder andere personenbezogene Angaben zu dem Nutzer 128 handeln. Insbesondere kann es sich bei dem Attribut 126 auch um biometrische Daten des Nutzers 128, wie zum Beispiel Fingerabdruck- oder Irisscandaten handeln.

Der Prozessor 102 dient zur Ausführung eines Anwendungsprogramms 130, welches die das Dokument 100 betreffenden Schritte eines kryptografischen Protokolls implementiert, dessen erfolgreiche Durchführung Voraussetzung für einen Lesezugriff des Lesegeräts 115 auf das Attribut 126 ist. Durch ein Anwendungsprogramm 132 des Lesegeräts 115 werden die entsprechenden Schritte des kryptografischen Protokolls, die das Lesegerät 115 betreffen, lesegerätseitig implementiert. Bei dem kryptografischen Protokoll kann es zum Beispiel um ein Challenge-Response-Protokoll und/oder ein Diffie-Hellman-Protokoll zur Authentifizierung des Lesegeräts 115 gegenüber dem Dokument 100 handeln. Insbesondere kann es sich bei dem kryptografischen Protokoll um ein Basic Access Control- und/oder Extended Access Control-Protokoll oder ein PACE-Protokoll handeln.

Das Lesegerät 115 hat einen Signalgeber 134, der dazu dient, einen Umgebungszustand für das Dokument 100 zu schaffen, wenn sich das Dokument 100 innerhalb der Reichweite der Chipkarten-Schnittstelle 117 des Lesegeräts 115 befindet. Beispielsweise kann es sich bei dem Signalgeber 134 um eine Strahlungsquelle handeln, die den Sensor 106 mit einer Strahlung beaufschlagt, wenn das Dokument 100 in das Lesegerät 115 eingeführt oder auf das Lesegerät 115 aufgelegt ist.

Alternativ kann es sich bei dem Signalgeber 134 um zum Beispiel einen Permanentmagneten handeln, auf den der Sensor 106 positioniert werden muss, um den Umgebungszustand, das heißt hier das magnetische Feld, zu schaffen, was zu der Abgabe des Sensorsignals durch den Sensor 106 führt. Ferner kann es sich bei dem Signalgeber 134 auch um ein mechanisches Element handeln, was zum Beispiel beim Einführen des Dokuments 100 in das Lesegerät 115 oder beim Auflegen des Dokuments 100 auf des Lesegerät 115 einen Druck auf den Sensor 106 ausübt, wobei der Sensor 106 den entsprechenden Umgebungszustand mechanisch sensiert und das Sensorsignal abgibt.

Das Lesegerät 115 kann mit einem Display 136 verbunden sein, auf dem das Attribut 126 angezeigt werden kann. Falls es sich bei dem Attribut 126 um ein biometrisches Merkmal des Nutzers 128 handelt, kann das Lesegerät 115 einen Biometriesensor zur Erfassung dieses biometrischen Merkmals 128 von dem Nutzer aufweisen, um das erfasste biometrische Merkmal mit dem Attribut 126, das heißt hier dem biometrischen Referenzmerkmal, auf Übereinstimmung zu prüfen.

Der Chip 108 hat zwei Anschlüsse 109, an denen die Antenne 110 angeschlossen ist, um den Chip 108 mit elektrischer Energie zu versorgen und um eine Kommunikation mit dem Lesegerät 115 zu ermöglichen. An diesen Anschlüssen 109 ist auch der Schalter 105 angeschlossen. In der hier betrachteten Ausführungsform ist der Schalter 105 von dem Typ "normally closed", das heißt der Schalter 105 ist geschlossen, solange kein Signal an seinem Steuereingang 107 anliegt.

In seinem geschlossenen, ersten Schaltzustand unterbricht also der Schalter 105 den Antennenschwingkreis der Chipkarten-Schnittstelle des Dokuments 100, indem die Anschlüsse 109 des Chips 108 und somit die Antenne 110 kurzgeschlossen werden. In diesem Fall ist der Antennenschwingkreis unterbrochen, da er nicht anschwingen kann.

Sobald aber der Sensor 106 ein Sensorsignal abgibt, wird der Steuereingang 107 des Schalters 105 so angesteuert, dass der Schalter 105 seinen Schaltzustand in den zweiten, geöffneten Schaltzustand wechselt, wie er in der Figur 1 dargestellt ist.

In diesem Schaltzustand schließt der Schalter 105 den Antennenschwingkreis der Chipkarten-Schnittstelle des Dokuments 100, indem der Kurzschluss der Antenne 110 aufgehoben wird und der Antennenschwingkreis des Dokuments 100 somit anschwingen kann.

Nach einer Ausführungsform der Erfindung handelt es sich bei dem Schalter 105 um einen Flipflop, das heißt eine bistabile Kippstufe, die zwei stabile Schaltzustände, nämlich den ersten und zweiten Schaltzustand, einnehmen kann. Beispielsweise liefert der Sensor 106 das Sensorsignal, solange er sich in der Reichweite des Signalgebers 134 des Lesegeräts 115 befindet. Solange das Sensorsignal an dem Steuereingang 107 des Schalters 105 anliegt, bleibt der Schalter 105 in seinem zweiten Schaltzustand. Wird der Sensor 106 aus der Reichweite des Signalgebers 134 entfernt, so gibt er sein Sensorsignal nicht mehr ab, woraufhin der Schalter 105 in seinen anderen stabilen Schaltzustand, das heißt den ersten Schaltzustand, zurückschaltet.

Nach einer weiteren Ausführungsform der Erfindung ist der Schalter 105 als Monoflop, das heißt als monostabile Kippstufe, ausgebildet. Beispielsweise ist der Sensor 106 dann so ausgebildet, dass er das Sensorsignal als Impuls abgibt, sobald der Sensor 106 in die Reichweite des Signalgebers 134 gebracht wird. Dieser Impuls bringt den Schalter 105 aus seinem stabilen ersten Schaltzustand in seinen unstabilen zweiten Schaltzustand, in dem der Schalter 105 bei der hier betrachteten Ausführungsform geöffnet ist, um den Antennenschwingkreis zu aktivieren.

Aus dem zweiten Schaltzustand fällt der Schalter 105 nach der vorgegebenen Zeitdauer wieder zurück in seinen ersten Schaltzustand, und zwar auch dann, wenn sich der Sensor 106 noch innerhalb der Reichweite des Signalgebers 134 befindet, da der Sensor 106 nur dann den Impuls abgibt, wenn er innerhalb der Reichweite des Signalgebers 134 gebracht wird, nicht aber wenn er innerhalb dieser Reichweite verharrt.

Vorzugsweise ist diese Zeitdauer so gewählt, dass sie für die Initialisierung der Chipkartenschnittstelle, die Durchführung des kryptografischen Protokolls und das Auslesen des Attributs 126 ausreichend lang ist. Die Zeitdauer ist also vorzugsweise so gewählt, dass innerhalb der Zeitdauer das Initialisierungskommando 138, die Antwort 140, die N Kommandos und die N Antworten für die Durchführung des kryptografischen Protokolls empfangen bzw. gesendet werden können und zusätzlich auch das Lesekommando 146 und die entsprechende Antwort 148. Um einen weiteren Lesevorgang zu autorisieren muss der Nutzer 128 das Dokument 100 aus der Reichweite des Lesegeräts 115 entfernen und dann anschließend wieder in die Reichweite einbringen.

Solange der Umgebungszustand, der zur Abgabe des Sensorsignals führt, durch den Sensor 106 nicht erfasst wird, antwortet das Dokument 100 grundsätzlich nicht auf Kommandos des Lesegeräts 115, und zwar auch dann nicht, wenn sich das Dokument 100 in der Reichweite der Chipkarten-Schnittstelle 117 oder einer anderen Chipkarten-Schnittstelle eines nicht autorisierten Lesegeräts befindet, da es aufgrund der Unterbrechung des Antennenschwingkreises nicht mit elektrischer Energie versorgt wird.

Zum Lesen des Attributs 126 durch das Lesegerät 115 kann wie folgt vorgegangen werden:
1. Das Dokument 100 wird in die Reichweite der Chipkarten-Schnittstelle 117 des Lesegeräts 115 gebracht.
2. Das Dokument 100 wird relativ zu dem Lesegerät 115 so positioniert, dass der Sensor 106 in die Reichweite des Signalgebers 134 gebracht wird, beispielsweise indem der Sensor 106 auf oder unter dem Signalgeber 134 positioniert wird. Hierzu kann das Lesegerät 115 eine Positionierungshilfe, wie zum Beispiel eine Anlagekante, aufweisen, um das Dokument 100 dementsprechend zu positionieren. Aufgrund der Positionierung des Sensors 106 innerhalb der Reichweite des Signalgebers 134 sensiert der Sensor 106 einen vorbestimmten Umgebungszustand, wie zum Beispiel die Beaufschlagung des Sensors 106 durch den Signalgeber 134 mit Licht im sichtbaren und/oder unsichtbaren Bereich, in einen bestimmten Spektralbereich, einer bestimmten Modulation oder Pulssequenz und/oder die Beaufschlagung mit einem Magnetfeld oder einer mechanischen Kraft oder einem Druck, sodass der Sensor das Sensorsignal abgibt. Der Schalter 105 wechselt daraufhin seinen Schaltzustand, so dass der Antennenschwingkreis geschlossen wird und anschwingt.
3. Sendet nun das Lesegerät 115 von seiner Chipkarten-Schnittstelle 117 ein Initialisierungskommando IK 138 an das Dokument 100, so startet das Chipkartenbetriebssystem 122 die Ausführung des Programmmoduls 114. Aufgrund des Initialisierungskommandos 138 greift das Programmmodul 114 auf den Speicher 104 zu, um die Initialisierungsparameter 120 auszulesen, und um eine Antwort IP 140 auf das Initialisierungskommando 138 zu generieren, die eine oder mehrere der Initialisierungsparameter 120 beinhaltet. Diese Antwort 140 wird dann von dem Dokument 100 an das Lesegerät 115 übertragen und dort von der Chipkarten-Schnittstelle 117 empfangen. Anschließend wird durch das Programm 132 des Lesegeräts 115 ein Kommando GC 142 generiert, um die Ausführung des kryptografischen Protokolls zu starten. Hierbei kann es sich zum Beispiel um das Kommando "Get Challenge" handeln, um das Dokument 100 zur Erzeugung einer Challenge für die Durchführung eines Challenge-Response-Protokolls zum Zwecke der Authentifizierung des Lesegeräts 115 gegenüber dem Dokument 100 aufzufordern und in Form einer Antwort auf das Kommando 142 an das Lesegerät 115 zu senden. Das Kommando 142 wird entsprechend dem zumindest einen Initialisierungsparameter 120, den das Lesegerät zuvor mit der Antwort 140 empfangen hat, erzeugt und gesendet. Die Ausführung des Programmmoduls 112 wird gestartet, um das Kommando 142 zu empfangen und durch Ausführung des Anwendungsprogramms 130 zu verarbeiten, indem nämlich beispielsweise eine Challenge C erzeugt wird. Die entsprechende Antwort 144 mit der Challenge C wird dann durch Ausführung des Programmmoduls 112 an die Chipkarten-Schnittstelle 117 des Lesegeräts 115 gesendet. Für die weitere Ausführung des kryptografischen Protokolls zur Authentifizierung des Lesegeräts 115 gegenüber dem Dokument 100 werden weitere Kommandos 142 und Antworten 144 zwischen dem Lesegerät 115 und dem Dokument 100 ausgetauscht, wobei die Anzahl der Kommandos 142 und der entsprechenden Antworten 144 von dem konkreten kryptografischen Protokoll abhängt. Im Weiteren wird ohne Beschränkung der Allgemeinheit davon ausgegangen, dass für die Durchführung des kryptografischen Protokolls zur Authentifizierung des Lesegeräts 115 gegenüber dem Dokument und gegebenenfalls zur Authentifizierung des Dokuments 100 gegenüber dem Lesegerät 115 eine bestimmte Anzahl von N Kommandos 142 und entsprechenden Antworten 144 erforderlich sind.
4. Nachdem dieses kryptografische Protokoll erfolgreich durchgeführt worden ist und somit das Lesegerät 115 gegenüber dem Dokument authentifiziert ist und gegebenenfalls auch das Dokument 100 gegenüber dem Lesegerät 115, generiert das Anwendungsprogramm 132 ein Lesekommando L 146, welches durch Ausführung des Programmmoduls 112 von dem Dokument 100 empfangen und von dem Anwendungsprogramm 130 dahingehend verarbeitet wird, dass das zumindest eine Attribut 126 aus dem Speicher 104 ausgelesen wird und eine Antwort A 148 daraufhin erzeugt und durch Ausführung des Programmmoduls 112 an das Lesegerät 115 gesendet wird, welches diese zumindest eine Attribut 126 beinhaltet. Das Attribut 126 kann dann auf dem Display 136 des Lesegeräts 115 zum Beispiel für eine Ausweiskontrolle angezeigt werden.

Wird das Dokument 100 anschließend aus der Reichweite der Chipkarten-Schnittstelle 117 und des Signalgebers 134 des Lesegeräts 115 entfernt, so fällt der Schalter 105 in seinen ersten Schaltzustand zurück, d.h. der Schalter 105 schließt sich wieder.

Nach einer weiteren Ausführungsform der Erfindung ist das Chipkartenbetriebssystem 122 zur Abgabe eines Fehlersignals ausgebildet, wenn das Dokument ein ungültiges Kommando empfängt. Ein Senden einer Antwort mit diesem Fehlersignal auf ein solches ungültiges Kommando erfolgt aber nur dann, wenn der Antennenschwingkreis geschlossen ist; ansonsten wird eine Antwort mit einem Fehlersignal auf das ungültige Kommando von dem Dokument 100 nicht gesendet, so dass ein entsprechendes unautorisiertes Tracking des Nutzers 128 unterbunden wird.

Nach einer Ausführungsform der Erfindung hat das Lesegerät 115 einen optischen Scanner zur Erfassung einer sogenannten MRZ (Machine Readable Zone) 150 des Dokuments 100. Für die Durchführung des BAC-/PACE-Protokolls ist es erforderlich, dass zunächst die MRZ von dem Lesegerät 115 eingescannt wird, um daraus die für die anschließende Durchführung des kryptografischen Protokolls erforderlichen Schlüssel zu gewinnen. Vorzugsweise handelt es sich in diesem Fall bei dem Signalgeber 134 um eine Lichtquelle des optischen Scanners, die ohnehin vorhanden sein muss und somit eine doppelte Verwendung findet. Beispielsweise liefert die Lichtquelle, das heißt der Signalgeber 134, Licht im Bereich zwischen 850 nm und 950 nm mit einem Maximum bei 900 nm, welches auch als B900-Band bezeichnet wird.

Nach einer weiteren Ausführungsform der Erfindung sendet der Signalgeber 134 eine Signalsequenz von spezifischen Lichtsignalen unterschiedlicher Wellenlänge ab, wie zum Beispiel einen ersten Puls von 200 ms Länge von Strahlung im Infrarotbereich, gefolgt von einem Puls von 500 ms Länge von Strahlung im sichtbaren Bereich. Auch komplexere Signalsequenzen können vordefiniert sein, deren Erfassung Voraussetzung für die Abgabe des Sensorsignals durch den Sensor 106 sind.

Nach einer Ausführungsform der Erfindung entspricht die von den Chipkarten-Schnittstellen 117 des Lesegeräts 115 und des Dokuments 100 gebildete Kommunikations-Schnittstelle dem Standard ISO/IEC 14443-4. In diesem Fall handelt es sich bei dem Initialisierungskommando 138 um das Request for Answer to Select (RATS)-Kommando. Bei der Antwort 140, die das Dokument 100 daraufhin an das Lesegerät 115 sendet, sofern der Freigabezustand vorliegt, das heißt F ungleich 0, handelt es sich um Answer to Select (ATS). Bei den Initialisierungsparametern 120 handelt es sich dann beispielsweise um einen oder mehrere der folgenden Protokollparameter:

| **Parameter** | **Beschreibung** |
|---|---|
| FSCI | Frame Size Card Integer: maximale Anzahl der Bytes, die in einem Block vom Lesegerät 115 an das Dokument 100 gesendet werden dürfen |
| DS | Data Rate Sent: unterstützte Datenraten des Dokuments 100 bei der Datenübertragung von dem Dokument 100 zum Lesegerät 115; mögliche Werte sind 106, 204, 408, 816 kBit/s |
| DR | Data Rate Sent: unterstützte Datenraten des Dokuments 100 bei der Datenübertragung vom Lesegerät 115 zum Dokument 100; die möglichen Werte sind wie bei DS |
| FWI | Frame Waiting Integer: Dieser Parameter definiert die "Frame Waiting Time", also die maximale Zeit, die das Lesegerät 115 nach der Aussendung eines Kommandos auf die Antwort des Dokuments zu warten hat. Wurde nach Ablauf dieser Zeit keine Antwort von dem Dokument 100 empfangen, so tritt ein "Timeout"-Fehler in der Kommunikation auf. |

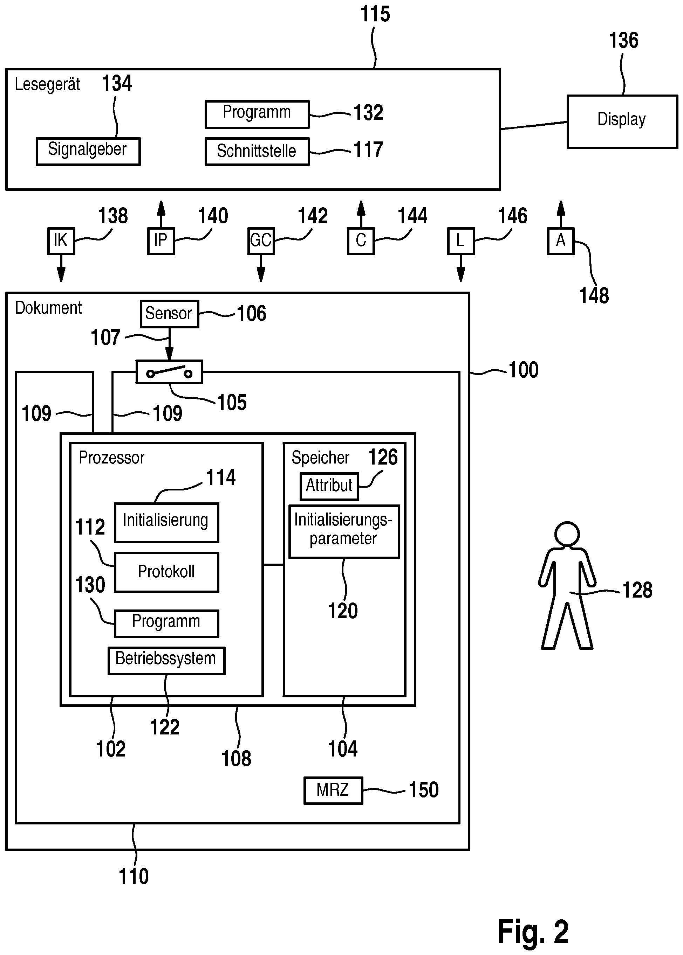

Die Figur 2 zeigt eine weitere Ausführungsform eines erfindungsgemäßen elektronischen Systems. Bei der hier gezeigten Ausführungsform ist der Schalter 105 nicht parallel zu der Antenne 110 geschaltet, sondern in Serie. Der Schalter 105 ist hier von dem Typ "normally off", das heißt der Schalter befindet sich in seinem geöffneten ersten Schaltzustand, in dem der Antennenschwingkreis unterbrochen ist, wenn an seinem Steuereingang 107 kein Signal anliegt. Aufgrund des Sensorsignals schließt der Schalter 105 und befindet sich dann in seinem geschlossenen zweiten Schaltzustand.

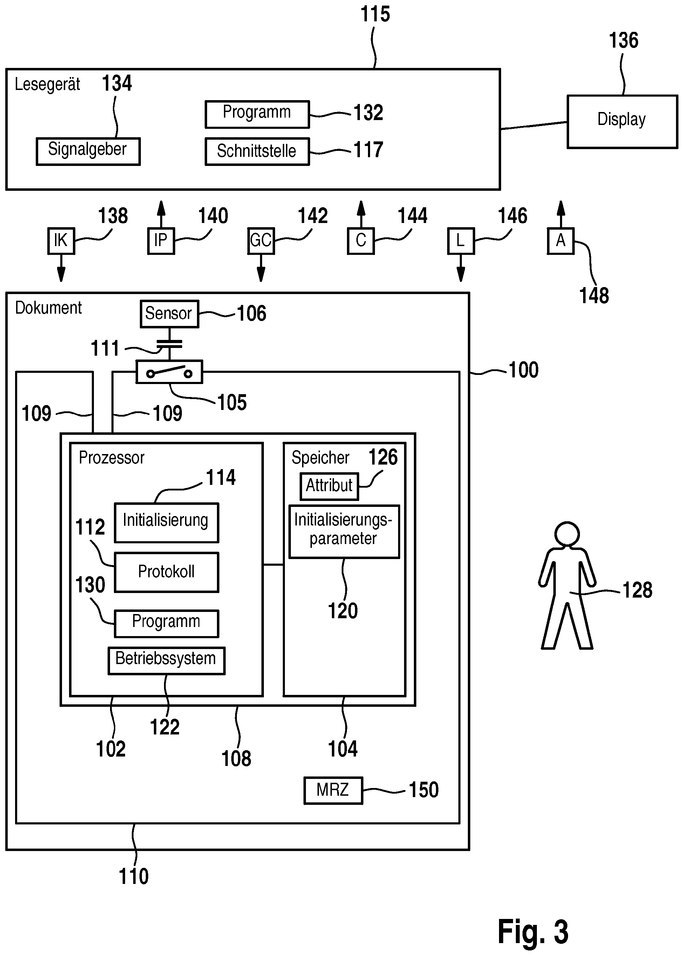

Die Figur 3 zeigt eine Weiterbildung der Ausführungsform gemäß Figur 2, bei der der Sensor 106 als optischer Sensor ausgebildet ist. Zu dem Sensor 106 gehört ein Ladungsspeicher 111, wie zum Beispiel ein Kondensator. Sobald der Nutzer 128 das Dokument aus seiner Tasche nimmt, fällt Licht auf den Sensor 106, sodass dieser eine Spannung abgibt und ein Ladestrom in den Ladungsspeicher 111 fließt.

Sobald der Ladungsspeicher 111 einen vorbestimmten Ladungszustand erreicht hat, liegt an dem Steuereingang 107 eine bestimmte Spannung an, die dazu führt, dass der Schalter 105 seinen geöffneten, ersten Schaltzustand verlässt, um in seinen zweiten geschlossenen Schaltzustand überzugehen, in dem der Antennenschwingkreis geschlossen ist. Führt nun der Nutzer 128 das Dokument 100 in das Lesegerät 115 ein oder legt er das Dokument 110 auf das Lesegerät 115 auf, so fällt kein Licht mehr auf den Sensor 106, sodass sich der Ladungsspeicher 111 während einer Entladungszeit allmählich entlädt.

Sobald die Spannung an dem Steuereingang 107 des Schalters 105 aufgrund dieser Entladung hinreichend abgefallen ist, geht der Schalter 105 wieder in seinen geöffneten ersten Schaltzustand zurück. Vorzugsweise wird die Entladungszeit des Ladungsspeichers 111 so gewählt, dass der Schalter 105 hinreichend lange in seinem zweiten Schaltzustand bleibt, um zum Beispiel die Initialisierung der Chipkartenschnittstelle, das kryptografische Protokoll und das Auslesen des Attributs 126 durch das Lesegerät 115 durchzuführen. Von besonderem Vorteil bei dieser Ausführungsform ist, dass das Lesegerät 115 nicht über einen Signalgeber 134 verfügen muss.

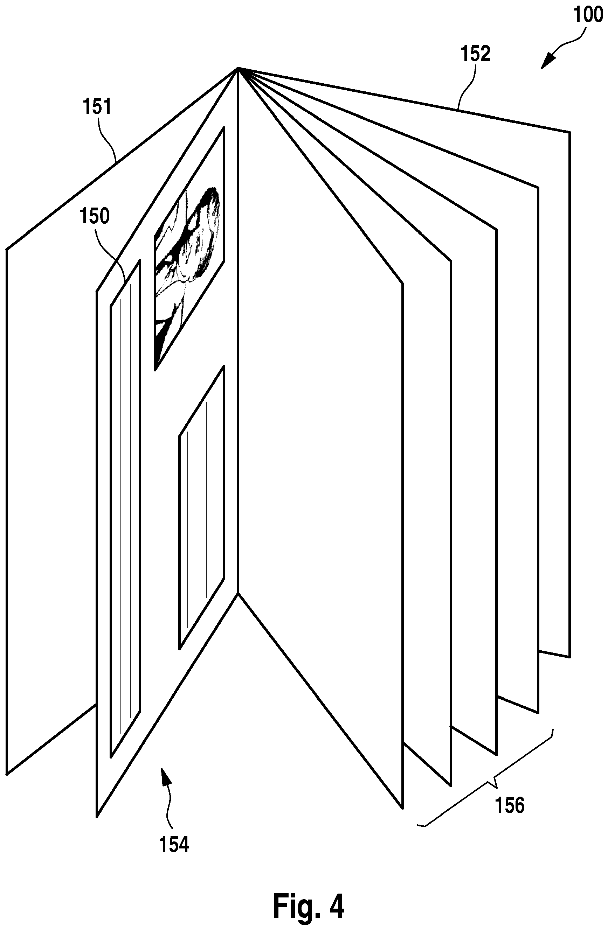

Die Figur 4 zeigt eine Ausführungsform des Dokuments 100 als buchförmiges Dokument, insbesondere als elektronischer Personalausweis. Das Dokument hat einen vorderen Buchdeckel 151 und einen hinteren Buchdeckel 152, eine Personalisierseite 154 sowie Innenbögen 156.

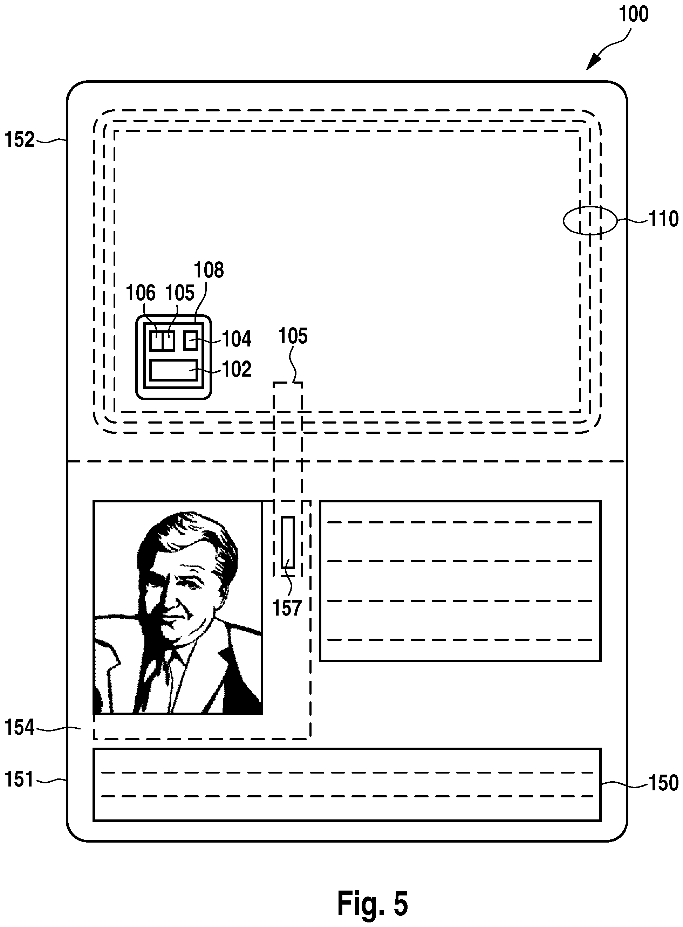

Die Figur 5 zeigt das Dokument 100 in aufgeschlagenem Zustand. Wie in der Figur 5 dargestellt, ist bei der hier betrachteten Ausführungsform der Chip 108 in den Buchdeckel 152 integriert, sowie auch die Antenne 110. Bei dem Sensor 106 kann es sich hier um einen optischen Sensor handeln, der das Sensorsignal abgibt, sobald Licht auf den Sensor fällt. Licht kann nämlich nur dann auf den Sensor 106 fallen, wenn der Nutzer das Dokument 100 aufklappt. Dadurch ist sichergestellt, dass nicht unbemerkt von dem Nutzer 128 ein Tracking erfolgen kann.

Alternativ oder zusätzlich ist eine Leiterbahn 157 auf der Personalisierseite 154 angeordnet. Bei geschlossenem Passbuch liegt die Leiterbahn 157 auf den Windungen der Antenne 110 und schließt diese kurz, da die Antennenwindungen zumindest in dem Bereich der Leiterbahn 157 leitend an die Oberfläche des Buchdeckels 152 kommen.

Durch die Leiterbahn 157 wird zusammen mit den Antennenwindungen der Antenne 110 ein alternativer oder weiterer Schalter 105 gebildet, der bei geschlossenem Dokument 100 seinen ersten Schaltzustand hat, indem er nämlich die Antenne 110 kurzschließt und damit den Antennenschwingkreis unterbricht, und der bei geöffnetem Dokument 100, wie in der Figur 5 dargestellt, seinen zweiten Schaltzustand hat, in dem dieser Kurzschluss aufgehoben ist und der Antennenschwingkreis somit geschlossen ist und anschwingen kann.

Von besonderem Vorteil bei dieser Ausführungsform ist, dass ein Sensor 106 nicht erforderlich ist, da der alternative Schalter 105, der durch die Antennenwindungen und die Leiterbahn 157 gebildet wird, keinen Steuereingang hat, sondern unmittelbar durch das Auf- und Zuklappen des Dokuments 100 betätigt wird.

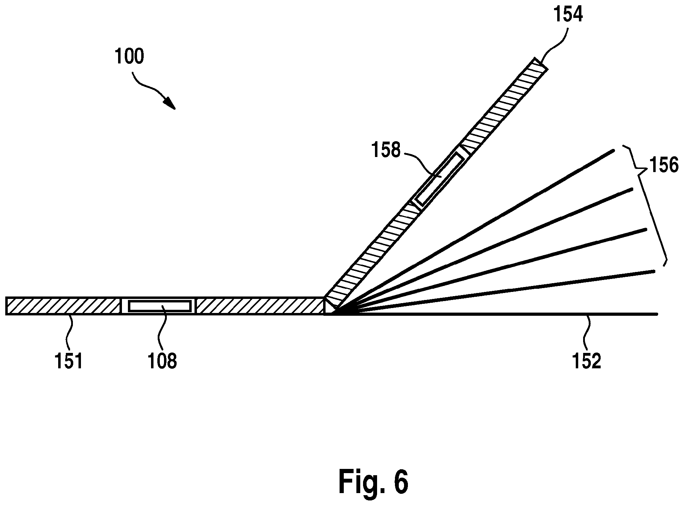

Die Figur 6 zeigt eine weitere Ausführungsform der Erfindung, bei der der Sensor 106 als Magnetsensor ausgebildet ist, wie zum Beispiel als ein sogenannter Reed-Schalter. Der Chip 108 ist bei der hier betrachteten Ausführungsform in dem Buchdeckel 151 integriert. Auf der Personalierseite 154 ist ein Permanentmagnet 158 angeordnet, zum Beispiel in Form einer permanentmagnetischen Folie, die sich als Inlay in der Personalierseite 154 befindet.

Solange das Dokument 100 geschlossen ist, befindet sich der Permanentmagnet 158 über dem Sensor 106, sodass der Reed-Schalter einen ersten Schaltzustand hat, z.B. geschlossen ist. In diesem Schaltzustand ist der Antennenschwingkreis unterbrochen.

Wird hingegen das Dokument 100 aufgeklappt, wie in der Figur 6 gezeigt, so wird der Sensor 106, das heißt hier der Read-Schalter, nicht mehr mit dem Magnetfeld des Permanentmagneten 158 beaufschlagt, sodass der Read-Schalter einen zweiten Schaltzustand, beispielsweise geöffnet, einnimmt, in dem der Antennenschwingkreis geschlossen ist.

### Bezugszeichenliste

- 100: Dokument
- 102: Prozessor
- 104: nicht-flüchtiger Speicher
- 105: Schalter
- 106: Sensor
- 107: Steuereingang
- 108: Chip
- 109: Anschlüsse
- 110: Antenne
- 111: Ladungsspeicher
- 112: Programmmodul
- 114: Programmmodul
- 115: Lesegerät
- 117: Chipkarten-Schnittstelle
- 120: Initialisierungsparameter
- 122: Chipkartenbetriebssystem
- 124: flüchtiger Speicher
- 126: Attribut
- 128: Nutzer
- 130: Anwendungsprogramm
- 132: Anwendungsprogramm
- 134: Signalgeber
- 136: Display
- 138: Initialisierungskommando
- 140: Antwort
- 142: Kommando
- 144: Antwort
- 146: Lesekommando
- 148: Antwort
- 150: Machine Readable Zone (MRZ)
- 151: Buchdeckel
- 152: Buchdeckel
- 154: Personalisierseite
- 156: Innenbögen
- 157: Leiterbahn
- 158: Permanentmagnet

## Patentansprüche

1. Dokument mit
- einer kontaktlosen Chipkartenschnittstelle (110, 112, 114) mit einem Antennenschwingkreis (110) zur Kommunikation mit einem Lesegerät (115) nach einem request-response Übertragungsprotokoll und zur Einkopplung von elektrischer Energie von dem Lesegerät zur Energieversorgung des Dokuments, wobei die Chipkartenschnittstelle eine erste Übertragungsprotokollkomponente (114) zum Senden von Protokollparametern für eine Initialisierung des Übertragungsprotokolls aufgrund des Empfangs eines Initialisierungskommandos (138) und eine zweite Übertragungsprotokollkomponente (112) zur Übertragung von Anwendungsdaten nach der Initialisierung des Übertragungsprotokolls mit Hilfe der Protokollparameter aufweiset, wobei die zweite Übertragungsprotokollkomponente dazu ausgebildet ist zumindest ein Lesekommando (146) zum Lesen von Anwendungsdaten zu empfangen und daraufhin eine Antwort (148) mit den Anwendungsdaten zu senden,
- einem Prozessor (102) zur Ausführung der ersten und zweiten Übertragungsprotokollkomponenten, eines Chipkartenbetriebssystems (122) und eines Anwendungsprogramms (130),
- einem Schalter (105) zum Schalten des Schalters in einen ersten oder einen zweiten Schaltzustand, wobei der Schalter den Antennenschwingkreis unterbricht, wenn der Schalter einen der ersten und zweiten Schaltzustände hat, und der Schalter den Antennenschwingkreis schließt, wenn der Schalter den anderen der ersten und zweiten Schaltzustände hat,
- einem nicht-flüchtigen Speicher (104), in dem Anwendungsdaten gespeichert sind, die zumindest ein Attribut (126) eines Nutzers (128) beinhalten, der dem Dokument zugeordnet ist,
wobei das Chipkartenbetriebssystem dazu ausgebildet ist, aufgrund des Empfangs des Initialisierungskommandos die erste Übertragungsprotokollkomponente zum Senden einer Antwort mit den Protokollparametern anzusteuern wobei das Anwendungsprogramm ein kryptographisches Protokoll implementiert, so dass Aufgrund eines Lesekommandos (146) zum Lesen des Attributs nur dann eine Antwort (148) mit dem Attribut erzeugt und mit Hilfe der zweiten Übertragungsprotokollkomponente gesendet wird, wenn zuvor das kryptographische Protokoll erfolgreich durchgeführt worden ist.

2. Dokument nach Anspruch 1, mit einem Sensor (106) zur Abgabe eines Sensorsignals, wobei der Schalter einen Steuereingang (107) aufweist, wobei der Steuereingang mit dem Sensor zum Empfang des Sensorsignals gekoppelt ist, sodass der Schalter aufgrund des Empfangs des Sensorsignals seinen Schaltzustand wechselt.

3. Dokument nach Anspruch 2, wobei es sich bei dem Sensor um einen optischen Sensor, einen Magnetsensor oder einen mechanischen Sensor handelt.

4. Dokument nach Anspruch 3, wobei der Sensor als optischer Sensor ausgebildet ist, der das Sensorsignal dann abgibt, wenn Strahlung in einem sichtbaren und/oder unsichtbaren Frequenzbereich von dem Sensor erfasst wird.

5. Dokument nach Anspruch 2, 3 oder 4, wobei der Sensor zur Detektion einer vorgegebenen Signalsequenz ausgebildet ist und das Sensorsignal aufgrund der Erfassung der Signalsequenz abgibt.

6. Dokument nach einem der vorhergehenden Ansprüche, wobei der Schalter als elektronischer Schalter, insbesondere mit zumindest einem steuerbaren Halbleiterschalter, insbesondere als bistabile Kippstufe oder monostabile Kippstufe, ausgebildet ist, oder als magnetischer Schalter, insbesondere Reedschalter, oder als mechanischer Schalter.

7. Dokument nach einem der vorhergehenden Ansprüche, wobei der Antennenschwingkreis zumindest eine Antenne (110) mit zumindest einer Antennenwindung aufweist, die von dem Schalter (105, 157) unterbrochen oder kurzgeschlossen wird, wenn der Schalter den einen der ersten und zweiten Schaltzustände hat.

8. Dokument nach einem der vorhergehenden Ansprüche 2 bis 7, wobei der Sensor als optischer Sensor ausgebildet ist, und der optische Sensor einen Ladungsspeicher (111) aufweist, der von dem optischen Sensor aufgeladen wird, wenn Strahlung auf den optischen Sensor fällt, wobei der Ladungsspeicher das Sensorsignal abgibt und es sich bei dem Schalter um eine bistabile Kippstufe handelt.

9. Dokument nach einem der vorhergehenden Ansprüche, wobei das Dokument buchförmig ausgebildet ist, wobei der Schalter so ausgebildet ist, dass der Schalter den einen der ersten und zweiten Schaltzustände hat, in dem der Schalter den Antennenschwingkreis unterbricht, wenn das Dokument geschlossen ist, und der Schalter den anderen der ersten und zweiten Schaltzustände hat, in dem der Schalter den Antennenschwingkreis schließt, wenn das Dokument aufgeschlagen ist.

10. Dokument nach Anspruch 9, wobei der Schalter durch eine Leiterbahn (157) gebildet wird, die auf einer Seite (154) oder einem Buchdeckel (151, 152) des Dokuments angeordnet ist, wobei die Leiterbahn den Antennenschwingkreis unterbricht, wenn das Dokument geschlossen ist.

11. Dokument nach Anspruch 10, wobei die Leiterbahn eine Antennenwindung des Antennenschwingkreises kurzschließt, wenn das Dokument geschlossen ist, wobei der Kurzschluss aufgehoben wird, wenn das Dokument aufgeschlagen wird.

12. Dokument nach Anspruch 9, wobei auf einer Seite (154) oder einem Buchdeckel (151, 152) des Dokuments ein Signalgeber (158) so angeordnet ist, dass ein Aufschlagen des Dokuments zur Abgabe des Sensorsignals führt.

13. Dokument nach Anspruch 12, wobei es sich bei dem Signalgeber um einen Permanentmagneten handelt.

14. Dokument nach einem der vorhergehenden Ansprüche, wobei das ChipkartenBetriebssystem zur Erzeugung eines Fehlersignals als Antwort auf ein empfangenes ungültiges Kommando ausgebildet ist.

15. Dokument nach einem der vorhergehenden Ansprüche, wobei es sich um ein Wert- oder Sicherheitsdokument, insbesondere eine Chipkarte oder ein elektronisches Ausweisdokument handelt.

16. Elektronisches System mit einem Dokument (100) nach einem der vorhergehenden Ansprüche und dem Lesegerät (115).

17. Elektronisches System nach Anspruch 16, wobei das Lesegerät einen Signalgeber (134) beinhaltet, der dazu ausgebildet ist, den Schalter (124) zu schalten.

## Claims

1. A document with
- a contactless chip card interface (110, 112, 114) with an antenna resonant circuit (110) for communicating with a reader (115) in accordance with a request-response transmission protocol and for coupling in electrical energy from the reader in order to supply energy to the document, wherein the chip card interface has a first transmission protocol component (114) for sending protocol parameters for an initialisation of the transmission protocol on account of the receipt of an initialisation command (138) and a second transmission protocol component (112) for transmitting application data after the initialisation of the transmission protocol with the aid of the protocol parameters, wherein the second transmission protocol component is designed to receive at least one read command (146) for reading application data and, thereupon, to send a response (148) comprising the application data,
- a processor (102) for executing the first and second transmission protocol components, a chip card operating system (122) and an application program (130),
- a switch (105) for switching the switch into a first or a second switching state, wherein the switch interrupts the antenna resonant circuit when the switch has one of the first and second switching states, and the switch connects the antenna resonant circuit when the switch has the other of the first and second switching states,
- a non-volatile memory (104), in which application data are stored which contain at least one attribute (126) of a user (128) who is associated with the document,
wherein the chip card operating system is designed, on account of the receipt of the initialisation command, to actuate the first transmission protocol component in order to send a response comprising the protocol parameters, wherein the application program implements a cryptographic protocol so that, on the basis of a read command (146) to read the attribute, a response (148) comprising the attribute is generated and is sent with the aid of the second transmission protocol component only if the cryptographic protocol has been performed successfully beforehand.

2. The document according to claim 1, with a sensor (106) for emitting a sensor signal, wherein the switch has a control input (107), wherein the control input is coupled to the sensor for receiving the sensor signal so that the switch changes its switching state on account of the receipt of the sensor signal.

3. The document according to claim 2, wherein the sensor is an optical sensor, a magnetic sensor or a mechanical sensor.

4. The document according to claim 3, wherein the sensor is designed as an optical sensor which outputs the sensor signal when radiation in a visible and/or non-visible frequency range is detected by the sensor.

5. The document according to claim 2, 3 or 4, wherein the sensor is designed to detect a predefined signal sequence and emits the sensor signal on account of the detection of the signal sequence.

6. The document according to any one of the preceding claims,
wherein the switch is designed as an electronic switch, in particular with at least one controllable semiconductor switch, in particular as a bistable toggle switch or monostable toggle switch, or as a magnetic switch, in particular a reed switch, or as a mechanical switch.

7. The document according to any one of the preceding claims,
wherein the antenna resonant circuit has at least one antenna (110) with at least one antenna winding, which is interrupted or shortcircuited by the switch (105, 157) when the switch has one of the first and second switching states.

8. The document according to any one of preceding claims 2 to 7,
wherein the sensor is designed as an optical sensor, and the optical sensor has a charge storage device (111), which is charged by the optical sensor when radiation is incident on the optical sensor, wherein the charge storage device emits the sensor signal and the switch is a bistable toggle switch.

9. The document according to any one of the preceding claims,
wherein the document is book-shaped, wherein the switch is designed such that the switch has the one of the first and second switching states in which the switch interrupts the antenna resonant circuit when the document is closed, and the switch has the other of the first and second switching states in which the switch closes the antenna resonant circuit when the document is opened.

10. The document according to claim 9, wherein the switch is formed by a conductive track (157), which is arranged on one side (154) or a book cover (151, 152) of the document, wherein the conductive track interrupts the antenna resonant circuit when the document is closed.

11. The document according to claim 10, wherein the conductive track short-circuits an antenna winding of the antenna resonant circuit when the document is closed, wherein the short-circuit is cancelled when the document is opened.

12. The document according to claim 9, wherein a signal emitter (158) is arranged on one side (154) or a book cover (151, 152) of the document such that the opening of the document leads to the emission of the sensor signal.

13. The document according to claim 12, wherein the signal emitter is a permanent magnet.

14. The document according to any one of the preceding claims,
wherein the chip card operating system is designed to generate an error signal in response to a received invalid command.

15. The document according to any one of the preceding claims,
wherein it is a value or security document, in particular a chip card or electronic identification document.

16. An electronic system comprising a document (100) according to any one of the preceding claims and the reader (115).

17. The electronic system according to claim 16, wherein the reader contains a signal emitter (134) which is designed to switch the switch (124).

## Revendications

1. Document avec
- une interface de carte à puce (110, 112, 114) sans contact dotée d'un circuit résonant d'antenne (110) pour la communication avec un lecteur (115) selon un protocole de transmission de type question-réponse et pour le couplage d'énergie électrique du lecteur en vue de l'alimentation en énergie du document, où l'interface de carte à puce présente un premier composant de protocole de transmission (114) pour l'envoi de paramètres de protocole destinés à une initialisation du protocole de transmission suite à la réception d'une commande d'initialisation (138), et un deuxième composant de protocole de transmission (112) pour la transmission de données d'application après l'initialisation du protocole de transmission à l'aide des paramètres de protocole, où le deuxième composant de protocole de transmission est conçu pour au moins recevoir une commande de lecture (146) pour la lecture de données d'application et pour envoyer ensuite une réponse (148) avec les données d'application,
- un processeur (102) pour l'exécution des premier et deuxième composants de protocole de transmission, d'un système de fonctionnement de carte à puce (122) et d'un programme d'application (130),
- un commutateur (105) pour commuter le commutateur dans un premier état de commutation ou un second, où le commutateur interrompt le circuit résonnant d'antenne lorsque le commutateur possède l'un parmi le premier et le second état de commutation, et le commutateur ferme le circuit résonnant d'antenne lorsque le commutateur possède l'autre état parmi les premier et second états de commutation,
- une mémoire (104) non volatile dans laquelle sont stockées des données d'application qui contiennent au moins un attribut (126) d'un utilisateur (128) auquel est associé le document,
dans lequel le système de fonctionnement de la carte à puce est conçu pour, suite à la réception de la commande d'initialisation, démarrer le premier composant de protocole de transmission pour l'envoi d'une réponse avec les paramètres de protocole, où le programme d'application met en oeuvre un protocole cryptographique de sorte que suite à une commande de lecture (146) pour la lecture de l'attribut, une réponse (148) n'est générée avec l'attribut et n'est envoyée à l'aide du deuxième composant de protocole de transmission que si le protocole cryptographique a été exécuté avec succès auparavant.

2. Document selon la revendication 1, avec un capteur (106) pour la délivrance d'un signal de capteur, où le commutateur présente une entrée de commande (107), où l'entrée de commande est couplée avec le capteur pour la réception du signal de capteur de sorte que le commutateur change son état de commutation suite à la réception du signal de capteur.

3. Document selon la revendication 2, dans lequel, dans le cas du capteur, il s'agit d'un capteur optique, d'un capteur magnétique ou d'un capteur mécanique.

4. Document selon la revendication 3, dans lequel le capteur est conçu sous forme d'un capteur optique qui délivre le signal de capteur lorsqu'un rayonnement est détecté par le capteur dans un domaine de fréquences visibles et/ou non visibles.

5. Document selon la revendication 2, la revendication 3 ou la revendication 4, dans lequel le capteur est conçu pour la détection d'une séquence de signaux prédéfinie et émet le signal de capteur suite à la détection de la séquence de signaux.

6. Document selon l'une des revendications précédentes, dans lequel le commutateur est conçu sous forme de commutateur électronique, notamment avec au moins un commutateur semi-conducteur pouvant être commandé, en particulier sous forme de multivibrateur bistable ou multivibrateur monostable, ou sous forme de commutateur magnétique, notamment sous forme de commutateur Reed, ou sous forme de commutateur mécanique.

7. Document selon l'une des revendications précédentes, dans lequel le circuit résonnant d'antenne présente au moins une antenne (110) avec au moins une spire d'antenne qui est interrompue ou court-circuitée par le commutateur (105, 157) lorsque le commutateur possède l'un parmi les premier et deuxième états de commutation.

8. Document selon l'une des revendications précédentes 2 à 7, dans lequel le capteur est conçu sous forme de capteur optique, et le capteur optique présente une mémoire de charge (111) qui est chargée à partir du capteur optique lorsqu'un rayonnement tombe sur le capteur optique, où la mémoire de charge délivre un signal de capteur et où il s'agit dans le cas du commutateur, d'un multivibrateur bistable.

9. Document selon l'une des revendications précédentes, dans lequel le document est conçu sous forme de livre, où le commutateur est conçu de telle manière que le commutateur possède un état parmi les premier et second états de commutation, dans lequel le commutateur interrompt le circuit résonnant d'antenne lorsque le document est fermé et le commutateur possède l'autre état parmi les premier et second états de commutation, dans lequel le commutateur ferme le circuit résonnant d'antenne lorsque le document est ouvert.

10. Document selon la revendication 9, dans lequel le commutateur est formé par une piste conductrice (157) qui est disposée sur une page (154) ou sur une couverture (151, 152) du document, où la piste conductrice interrompt le circuit résonnant d'antenne lorsque le document est fermé.

11. Document selon la revendication 10, dans lequel la piste conductrice court-circuite une spire d'antenne du circuit résonnant d'antenne lorsque le document est fermé, où le court-circuit est enlevé lorsque le document est ouvert.

12. Document selon la revendication 9, dans lequel un transmetteur de signaux (158) est disposé sur une page (154) ou sur une couverture (151, 152) du document de telle manière qu'une ouverture du document provoque l'émission du signal de capteur.

13. Document selon la revendication 12, dans lequel, dans le cas du transmetteur de signaux, il s'agit d'un aimant permanent.

14. Document selon l'une des revendications précédentes, dans lequel le système de fonctionnement de carte à puce est conçu pour la génération d'un signal d'erreur servant de réponse à une commande non valide reçue.

15. Document selon l'une des revendications précédentes, où il s'agit d'un document de valeur ou de sécurité, notamment d'une carte à puce ou d'un document d'identité électronique.

16. Système électronique avec un document (100) selon l'une des revendications précédentes et un lecteur (115).

17. Système électronique selon la revendication 16, dans lequel le lecteur contient un transmetteur de signaux (134) qui est conçu pour commuter le commutateur (124).
